# EUROPEAN PATENT SPECIFICATION

(11) **EP 1 063 205 B1**
(45) Date of publication and mention of the grant of the patent: **22.01.2003**
(21) Application number: 99939186.5
(22) Date of filing: 11.03.1999
(51) Int. Cl.: C03C 27/12, B32B 17/10, G02B 27/01, B29C 47/88, B65H 18/28, B65H 39/16, B29C 53/56

(54) **INTERMEDIATE FILM FOR LAMINATED GLASS**
ZWISCHENSCHICHTFILM FÜR VERBUNDGLAS
FILM INTERMEDIAIRE POUR VERRE FEUILLETE

(30) Priority: 11.03.1998 JP 5992998; 13.07.1998 JP 19755898
(43) Date of publication of application: 27.12.2000
(60) Divisional application: 02022388.9
(73) Proprietor: SEKISUI CHEMICAL CO., LTD., Osaka-shi, Osaka 530-8565 (JP)
(72) Inventor: OMIZU, Morimasa, Sekisui Chemical Co., Ltd., Shiga 528-8585 (JP); SHICHIRI, Tokushige, Sekisui Chemical Co., Ltd., Osaka 618-0021 (JP)
(74) Representative: Boeters, Hans Dietrich, Dr.
(86) International application number: JP9901177
(87) International publication number: WO99046213

(56) References cited:
- JP-A- 3 209 210
- JP-A- 11 043 355
- US-I4- T 861 037

## Description

### TECHNICAL FIELD

The present invention relates to an intermediate film for laminated glass suited for a head-up display in its application to an automotive windshield, a process for its production, a laminated glass incorporating said intermediate film for laminated glass.

### PRIOR ART

In the front of a motor car, an airplane or the like, the so-called windshield known also as front glass is used. The front glass is usually a glass laminate consisting of two faced glass sheets and an intermediate film for laminated glass as sandwiched between the glass sheets.

Recent years have mounted a need, from safety considerations, for windshield of an automobile, the instrument-generated information such as speed and other running data of an automobile, for instance, can be displayed on the so-called head-up display (HUD) within the same visual field of the driver as the windshield.

Regarding the mechanism of HUD, many systems have heretofore been developed. In a typical system, the HUD display area does not exist on the surface of the windshield glass but the driver perceives the reflection of the data as a virtual image in the same position (that is to say, within the same visual field) as the windshield. However, since the laminated glass of windshield consists of two parallel sheets of glass, this system has the disadvantage that the driver has a double vision of the instrument display.

To overcome this disadvantage, US Patent No.5013134 discloses a technology of disposing an intermediate film having a wedge angle within the windshield glass. US Patent No.5087502 discloses a wedge-shaped sheet and a method for its manufacture. Furthermore, US Patent No.5639538 discloses a sheet which is uniform in thickness over at least 20% of its total area extending from either edge thereof and diminishes gradually in thickness toward the mid-line and which is to be slit around the mid-line.

Because those intermediate films for laminated glass are wedge-shaped in section, the above technologies have the disadvantage that trimming film are often produced in the lamination with grass and hence the efficiency is sacrificed. Moreover, since the sheet is partially uniform in thickness and wedge-shaped in the remainder, the risk is high for the deterioration of poor appearance along the borderline between the part uniform in thickness and the part having a wedge-shaped thickness profile in the lamination process.

When such an intermediate film having a wedged-shaped profile is applied to the curved wrap-around front glass, it is common practice to stretch the intermediate film in compliance with the surface configuration of the glass, thus making the film uniform in thickness.

As described typically in Japanese Kokai Publication Hei-3-209210, it is known that by using an intermediate film having a wedge-shaped thickness profile with its shape retained for the front glass having a head-up display function, a sharp reflection image can be formed without causing a double vision.

### SUMMARY OF THE INVENTION

The present invention, developed in view of the above state of the art, has for its object to provide an intermediate film for laminated glass which does not give rise to the trouble of poor appearance in its lamination with glass and can be easily produced without remodeling of the existing production equipment and superior in productivity.

The present invention is directed to an intermediate film for laminated glass used in the manufacture of laminated glass by sandwiching it between two facing glass sheets,
which comprises a sectional profile diminishing its thickness transversely in the manner of a curved form.

The present invention is further directed to an intermediate film for laminated glass used in the manufacture of laminated glass by sandwiching it between two facing glass sheets,
which comprises a sectional profile comprising a continuum of arcs having two or more different radii.

The present invention is further directed to a method of producing the intermediate film for laminated glass
which comprises feeding a starting composition for the intermediate film for laminated glass to a production equipment having an extruder, an extrusion die, a first cooling pressure roll and a second cooling pressure roll,
both of the cooling pressure roll having the clearances respectively controlled according to the sectional profile of the intermediate film to be produced.

The present invention is further directed to a laminated glass comprising the intermediate film for laminated glass of the present invention. There is no particular limitation on.the kind of glass that can be used for the laminated glass of the present invention. For example, it may be an inorganic glass such as float glass or an organic glass such as polycarbonate glass.

### BRIEF DESCRIPTION OF THE DRAWINGS

Fig. 1 is a layout of production equipment for producing the intermediate film for laminated glass of the present invention.
Fig. 2 is a schematic cross-section view showing the first cooling pressure roll in the above equipment for the production of the intermediate film for laminated glass in accordance with this invention.
Fig. 3 is a schematic cross-section view showing the second cooling pressure roll in the equipment for the production of the intermediate film for laminated glass of the present invention.
Fig. 4-1 is a sectional view showing the intermediate film for laminated glass produced by the process of producing the intermediate film for laminate glass of the present invention.
Fig. 4-2 is a sectional view showing the intermediate film for laminated glass produced by the process of producing the intermediate film for laminate glass of the present invention.
Fig. 5 is a sectional view showing an intermediate film having the wedge-shaped thickness profile as obtainable by the method of Comparative Example 1.
Fig. 6 is a sectional view showing an intermediate film having the wedge-shaped profile as obtainable by the method of Comparative Example 2.

Each reference numeral represents:
1. extruder
2. extrusion die for molding
3. first cooling pressure roll
4. second cooling pressure roll
5. ancillary equipment

### DEATAILED DESCRIPTION OF THE INVENTION

Hereinafter, the invention is described in detail.

Provided that it is a transparent thermoplastic resin, there is no particular limitation on the material for the intermediate film for laminated glass of the present invention. For example, such conventional materials as polyvinyl butyral resin, polyurethane resin and ethylenevinyl acetate copolymer resin can be employed.

The intermediate film for the laminated glass of the present invention is characterized by its unique sectional profile, and such an intermediate film for laminated glass is sandwiched between the two glass sheets. Thus, said sectional profile is such that the thickness of the sheet diminishes in the manner of a curve in the axial direction thereof. Moreover or alternatively said profile comprises a continuum of arcs having two or more different radii.

The term "diminishing in the manner of a curve" means that the intermediate film for laminated glass is gradually decreased in thickness along a curvature in the axial direction thereof.

The arc means a part of the circumference of a circle. The "two or more arcs" means that said continuum consists of a plurality of arcs and excludes the case in which the continuum consists in a single arc. Said arcs differ in the radius. That the arcs differ in the radius means that the radius of arc of one arc is different from the radius of another arc. Although arcs of the same radius of arc may exist among said plurality of arcs, the case in which all the arcs are equal in the radius of arc is excluded. The ratio of the number of arcs differing in the radius to the total number of arcs is preferably as many as possible.

The continuum of such arcs means a continual array of arcs. In other words, because of existing the arcs continually, such arcs exist in partially overlapped relation between adjacent circles.

Unlike the conventional intermediate film for laminated glass, the intermediate film for laminated glass having the above profile is free from the disadvantage of often giving rise to trimming film in the lamination process with glass. Moreover, compared with the prior art film which is partially uniform in thickness and wedge-shaped in the remaining part, the intermediate film for laminated film of the present invention does not cause the trouble of poor appearance along the borderline between the part of uniform thickness and the part having a wedge-shaped thickness profile in the lamination process with glass.

The process for producing the intermediate film for laminated glass of the present invention is now described in detail, reference being had to the accompanying drawings.

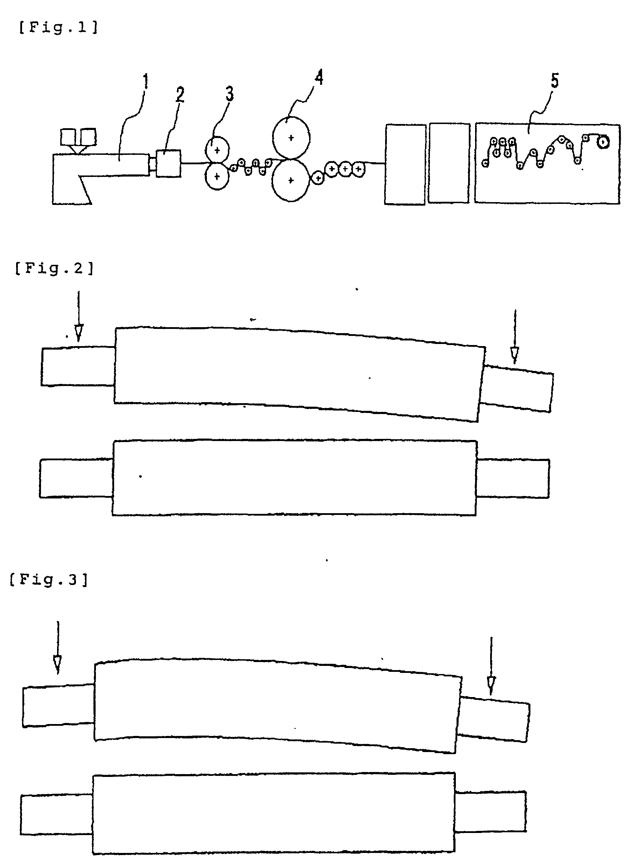

Fig. 1 is a schematic view showing a typical production equipment for use in the process for producing the intermediate film for laminated glass of the present invention. This production equipment comprises an extruder 1, an extrusion die 2, a first cooling pressure roll 3, a second cooling pressure roll 4 and ancillary equipment 5.

The thermoplastic resin for use as the material for the intermediate film for laminated glass of the present invention is provided in the extruder 1 and delivered in molten state to the extrusion die 2. The thermoplastic resin extruded in sheet form from this extrusion die is passed through said first cooling pressure roll 3 and further through said second cooling pressure roll 4, and finally wound up on a take-up device.

Fig. 2 shows the mechanism of action of the first cooling pressure roll 3. This first cooling pressure roll 3 is set to provide a clearance varying gradually from one axial end to the other, and dissimilar pressures are applied to the axial ends of the roll. Because of the deflection of the pressure rolls in response to the pressures applied, the thickness of the thermoplastic resin film can be varied transversally in a continuum of arcs having two or more radii.

Fig. 3 shows the mechanism of action of the second cooling pressure roll 4. This second cooling pressure roll 4 has a clearance with a gradient substantially corresponding to the transverse thickness of the thermoplastic resin film molding from said first cooling pressure roll 3 and has a uniformly patterned surface. As both axial ends of the second cooling pressure roll 4 are subjected to pressures not below predetermined levels, an intermediate film for laminated glass having a uniformly patterned surface can be produced.

Thus, the thermoplastic resin extruded from the extrusion die is guided to the first cooling pressure roll which has been set to have a different clearance between the two axial ends of the roll beforehand. Different pressures are applied to said axial ends of said cooling pressure roll respectively, whereupon the resulting deflection of the roll causes the resin film to assume a wedge-shape thickness profile in the axial direction. The film is further applied to said second cooling pressure roll which has been set to a different clearance between its two axial ends and dissimilar pressures are applied to the axial ends of the roll, whereby the film is provided with a section profile diminishing in thickness in the manner of a curve and, at the same time, evenly embossed in the axial direction thereof.

By the above-mentioned process, the intermediate film for laminated glass of the present invention can be obtained.

As mentioned above, the intermediate film for laminated glass of the present invention contributes greatly to the HUD function of the windshield, and the laminated glass obtainable by using such an intermediate film for laminated glass also falls within the scope of the present invention.

The preferred embodiments of this invention have been described above with reference to the drawings but many changes and modifications can be made by those skilled in the art without departing from the appended claims.

### BEST MODE FOR CARRYING OUT THE INVENTION

The following examples illustrate the present invention in further detail, and those examples are by no means defining the scope of the present invention.

### Example 1

Using the production equipment shown in Fig. 1, an intermediate film for laminated glass was produced under the following conditions.
Extrusion die
Slit width: 1300 mm
Die temperature: 180°C
First cooling pressure roll
Effective roll length: 2000 mm
temperature: 40°C
Second cooling pressure roll
Effective roll length: 2000 mm
Roll clearance: 0.47 mm

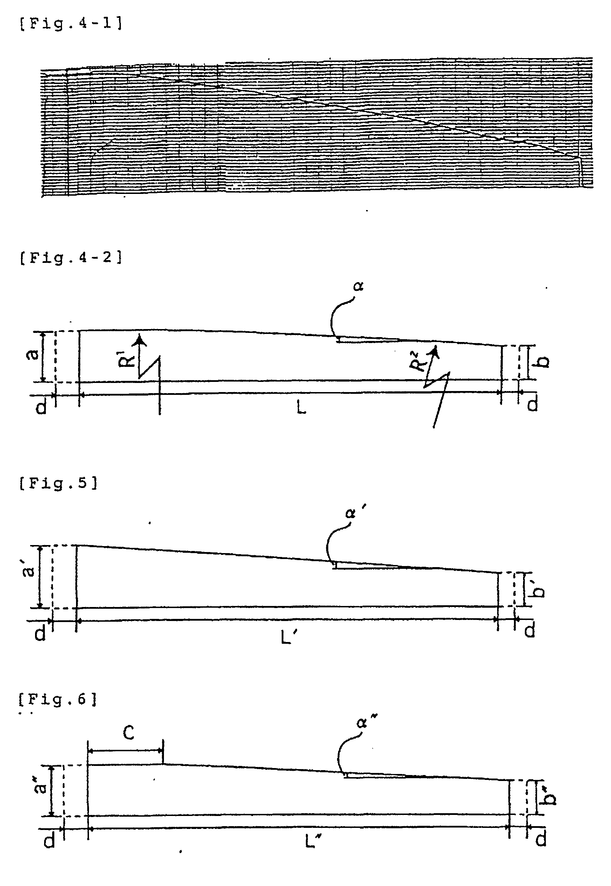

The sectional configuration of the intermediate film for laminated glass produced is shown in Figs. 4-1 and 4-2. The thickness profile and arc radii of this intermediate film for laminated glass are shown in Table 1.

The intermediate film according to Example 1 had a thickness profile comprising a continuum of arcs having two or more different radii.

**[Table 1]**

| | |
|---|---|
| width (L) | 1070mm |
| thickness (a) | 1.35mm |
| thickness (b) | 0.8mm |
| length of trimming (d) | 30mm |
| major radius (R₁) | 250m |
| major radius (R₂) | 330m |

### Comparative Example 1

Using the same production equipment as used in Example 1, an intermediate film having the wedge-shaped thickness profile illustrated in Fig. 5 was produced. Here, the respective clearances of the first cooling pressure roll and second cooling pressure roll were adjusted so that the gradient (α') of the thickness profile in the axial direction would be approximately equal to the gradient (α) according to Example 1. The thickness profile is shown in Table 2.

The intermediate films for laminated glass of Example 1 and Comparative Example 1 were compared with (α) of each other in regard to the weight of trimmings per 100 meters. The respective-weight data are given in Table 3.

**[Table 2]**

| | |
|---|---|
| width (L) | 1070mm |
| thickness (a') | 1.50mm |
| thickness (b') | 0.8mm |
| length of trimming (d) | 30mm |

**[Table 3]**

| | |
|---|---|
| Ex.1 | 7.5kg |
| Comp. Ex. 1 | 6.9kg |

### Comparative Example 2

Using the same production equipment as used in Example 1, an intermediate film having the wedge-shaped profile illustrated in Fig. 6 was produced.

Here, the respective clearances of the first and second cooling pressure rolls were adjusted so that the gradient (α") of the thickness profile in the axial direction would be substantially equal to the gradient (α) according to Example 1. The thickness profile is shown in Table 4.

The intermediate film for laminated glass of Example 1 and the intermediate film for laminated glass of Comparative Example 2 were respectively used in combination with flat glass sheets 3.00 mm each to fabricate a laminated glass. The laminated glass fabricated using the intermediate film for laminated glass of Comparative Example 2 was found to have been strained.

**[Table 4]**

| | |
|---|---|
| width (L) | 1070mm |
| thickness (a") | 1.35mm |
| thickness (b") | 0.8mm |
| thickness (c) | 230mm |
| length of trimming (d) | 30mm |

### INDUSTRIAL APPLICABILITY

In accordance with this invention described above, there can be obtained an intermediate film for laminated glass with a greater rate of diminution in thickness in the axial direction as compared with the conventional intermediate film having a wedge-shaped thickness profile with assurance of improved contact with glass, without the incidence of poor appearance and without requiring remodeling of the existing equipment. This intermediate film for laminated glass is very suitable for head-up display purposes.

## Claims

1. An intermediate film for laminated glass used in the manufacture of laminated glass by sandwiching it between two facing glass sheets,
which comprises a section profile diminishing in thickness in the manner of a curve in the axial direction thereof.

2. An intermediate film for laminated glass used in the manufacture of laminated glass by sandwiching it between two facing glass sheets,
which comprises a section profile comprising a continuum of arcs having two or more different radii.

3. A method of producing the intermediate film for laminated glass according to Claim 1 or 2 used in the manufacture of laminated glass,
which comprises feeding a starting composition for the intermediate film to a production equipment having an extruder, an extrusion die, first cooling pressure roll, and second cooling pressure roll,
both of the cooling pressure rolls having the clearances controlled according to the sectional profile of the intermediate film to be produced.

4. The method of producing the intermediate film for laminated glass according to Claim 3
wherein dissimilar pressures are applied to axial ends of said first and second cooling pressure rolls to cause deflection of the rolls and thereby reduce the respective clearances in the manner of a curve in the axial direction.

5. A laminated glass comprising the intermediate film for laminated glass according to Claim 1 or 2.

## Patentansprüche

1. Zwischenschichtfilm für Verbundglas, der bei der Herstellung von Verbundglas eingesetzt wird, indem er Sandwichartig zwischen zwei gegenüberliegende Glasplatten gebracht wird,
der ein Querschnittsprofil umfasst, das in der Dicke nach Art einer Kurve in deren axialer Richtung abnimmt.

2. Zwischenschichtfilm für Verbundglas, der bei der Herstellung von Verbundglas eingesetzt wird, indem er Sandwichartig zwischen zwei gegenüberliegende Glasplatten gebracht wird,
der ein Querschnittsprofil umfasst, das ein Kontinuum von Bögen mit zwei oder mehreren unterschiedlichen Radien umfasst.

3. Verfahren zur Herstellung des Zwischenschichtfilms für Verbundglas gemäß Anspruch 1 oder 2, der bei der Herstellung des Verbundglases eingesetzt wird,
das die Zuführung einer Ausgangszusammensetzung für den Zwischenschichtfilm zu einer Produktionseinrichtung umfasst, die einen Extruder, eine Strangpressmatrize, eine erste Kühldruckwalze und eine zweite Kühldruckwalze besitzt,
wobei die Kühldruckwalzen jeweils beide lichte Weiten besitzen, die entsprechend dem Querschnittsprofil des herzustellenden Zwischenschichtfilms kontrolliert werden.

4. Verfahren zur Herstellung des Zwischenschichtfilms für Verbundglas gemäß Anspruch 3,
wobei unterschiedliche Drücke auf die Achsenenden der besagten ersten und zweiten Kühldruckwalzen aufgebracht werden, um eine Verbiegung der Walzen herbeizuführen, und dadurch die jeweiligen lichten Weiten nach Art einer Kurve in der axialen Richtung zu vermindern.

5. Verbundglas, das den Zwischenschichtfilm für Verbundglas gemäß Anspruch 1 oder 2 umfasst.

## Revendications

1. Film intermédiaire pour verre feuilleté utilisé dans la fabrication de verre feuilleté par agencement en sandwich entre deux faces de verre, comprenant un profil de section diminuant en épaisseur selon une forme de courbe dans la direction axiale.

2. Film intermédiaire pour verre feuilleté utilisé dans la fabrication de verre feuilleté par agencement en sandwich entre deux faces de verre, comprenant un profil de section comprenant un continuum d'arcs possédant deux ou plus de deux rayons différents.

3. Procédé de production du film intermédiaire pour verre feuilleté selon la revendication 1 ou 2 utilisé dans la fabrication de verre feuilleté, comprenant l'alimentation d'une composition de départ pour le film intermédiaire dans un équipement de production comportant une extrudeuse, une filière d'extrusion, un premier rouleau presseur de refroidissement, et un second rouleau presseur de refroidissement, les deux rouleaux presseurs de refroidissement présentant des interstices ajustés en fonction du profil de section du film intermédiaire à produire.

4. Procédé de production du film intermédiaire pour verre feuilleté selon la revendication 3, dans lequel des pressions différentes sont appliquées aux extrémités axiales desdits premier et second rouleaux presseurs de refroidissement, ce qui réduit les interstices respectifs de manière à former une courbe dans la direction axiale.

5. Verre feuilleté comprenant le film intermédiaire pour verre feuilleté selon la revendication 1 ou 2.
